# EUROPEAN PATENT SPECIFICATION

(11) **EP 0 601 857 B1**
(45) Date of publication and mention of the grant of the patent: **04.03.1998**
(21) Application number: 93309910.3
(22) Date of filing: 09.12.1993
(51) Int. Cl.: G02B 1/04, G02C 7/02, B23K 26/00, B23K 26/06

(54) **Method of marking an ophthalmic lens**
Verfahren zum Markieren einer ophthalmischen Linse
Procédé de marquage d'une lentille ophtalmique

(30) Priority: 09.12.1992 JP 352528/92; 29.10.1993 JP 272121/93
(43) Date of publication of application: 15.06.1994
(73) Proprietor: Menicon Co., Ltd., Nagoya-shi Aichi-ken (JP)
(72) Inventor: Aikyo, Kazumi, Seki-shi, Gifu-ken (JP); Ohyama, Hiroyuki, Seki-shi, Gifu-ken (JP)
(74) Representative: Senior, Alan Murray

(56) References cited:
- EP-A- 0 264 255
- EP-A- 0 291 459
- EP-A- 0 307 874
- DE-A- 3 542 726
- DE-A- 4 143 066
- KUNSTSTOFFE, vol. 79, no. 6, June 1989, Munich DE, pp. 485-490; P. HOLZER et al.: 'Excimerlaser-Anwendungen in der Chemie- und Kunststoffindustrie'
- PATENT ABSTRACTS OF JAPAN, vol. 15, no. 467 (C-0888) 27 November 1991; & JP-A-03 199 142
- PATENT ABSTRACTS OF JAPAN, vol. 15, no. 467 (C-0888) 27 November 1991; & JP-A-03 199 143
- PATENT ABSTRACTS OF JAPAN, vol. 16, no. 49 (C-0908) 7 February 1992; & JP-A-03 252 335
- PATENT ABSTRACTS OF JAPAN, vol. 16, no. 49 (C-0908) 7 February 1992; & JP-A-03 252 334
- PLASTVERARBEITER, vol. 42, no. 5, May 1991, Speyer/Rhein DE, pp. 80-86; D. KNITTEL et al.: 'Oberflächen gezielt modifizieren'

## Description

The present invention relates to a method of marking an ophthalmic lens such as a contact lens and an intraocular lens with a letter, a symbol or the like.

In order to facilitate identification of optical characteristics, types, right or left or the like of an ophthalmic lens, a mark including a letter, a symbol or the like is put on the peripheral edge of the ophthalmic lens. Conventionally, such marking has been performed, for example, by a machining method in which a tool having a small cutting edge is used to scratch the surface of the ophthalmic lens so as to inscribe a mark, and an etching method in which a chemical is used to etch a mark.

Recently, in place of these methods, a marking method using a laser beam has been developed. This marking method using a laser beam is advantageously much easier to control, has a better reproducibility and can mark a number of lenses in a shorter time than the machining method and the etching method described above. Such a marking method by a laser beam is exemplified by a method of marking a soft contact lens disclosed in Japanese Patent Publication Nos 62-37368, JP-A-3 252334 and JP-A-3 252335.

Conventionally, a carbon dioxide laser (hereinafter referred to as "CO₂ laser") has been used as a laser beam source for such a marking method. The wavelength (10600 nm) emitted by the CO₂ laser belongs to the infrared region and involves a quite large thermal energy. The CO₂ laser beam is converged by a converging lens system into a minute beam spot at the surface of the lens, and the beam spot is moved along the pattern of the mark. The thermal energy causes the lens material to be dissolved so as to form recesses which define a mark including a letter, a symbol or the like.

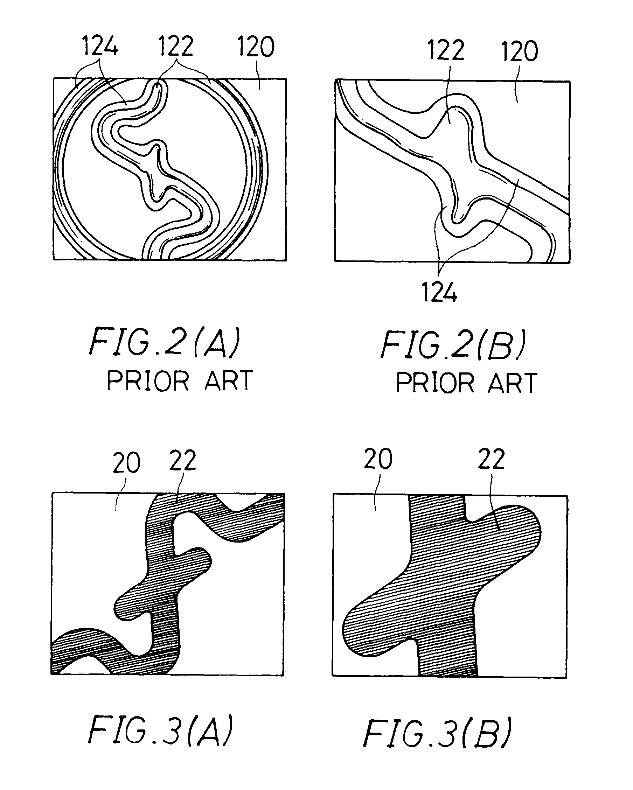

An example of a mark obtained by the marking method using the CO₂ laser is shown in FIGS. 2(A) and 2(B). FIGS. 2(A) and 2(B) schematically illustrate a microphotograph of the mark obtained by the CO₂ laser. FIG. 2(A) is a schematic view of the microphotograph of a low magnification, while FIG. 2(B) is a schematic view of the microphotograph of a high magnification.

As shown in FIGS. 2(A) and 2(B), a mark or recesses 122 are formed on a portion of the surface 120 of the contact lens by the thermal effect of the CO₂ laser. According to the marking method using the CO₂ laser, the thermal energy of the laser beam is so strong that the recesses 122 thus formed are deeper than required. The recesses 122 shown in FIGS. 2(A) and 2(B) have a depth of 10 µm or more. Consequently, these deep recesses 122 tend to develop deposits such as lipid and protein therein, which may possibly impart an adverse effect to the eye when the lens is put in the eye. Furthermore, the mechanical strength of the contact lens at the recessed portions 122 is reduced, causing easy breakage of the contact lens.

Further, as portions of the contact lens are dissolved by the thermal energy in the marking process, the recesses 122 are surrounded by peripheral ridges 124, as shown in FIGS. 2(A) and 2(B). Thus, the method involves the disadvantages that the mark appears rather obscure and that the ridges 124 give an unpleasant feeling when the lens is put in the eye.

In view of this point, another marking method has been developed in which a laser beam of a short wavelength emitted by an ultraviolet laser or the like is used to inscribe a clear mark having a minimum depth as required.

Such a marking method is disclosed, for example, in Japanese Laid-Open Patent Publications Nos. 64-13520 (EP-A2-0 291 459) and No 61-193119.

In the former prior art (Japanese Publication No. 64-13520), a laser beam emitted by an excimer laser source in which ArF gas is used as a medium is radiated to inscribe a mark. The diameter of the laser beam spot at the lens surface is adjusted to a line width of the mark to be inscribed, and the beam spot is moved along the pattern of the mark. With this prior art, a shallow recess is formed without edges.

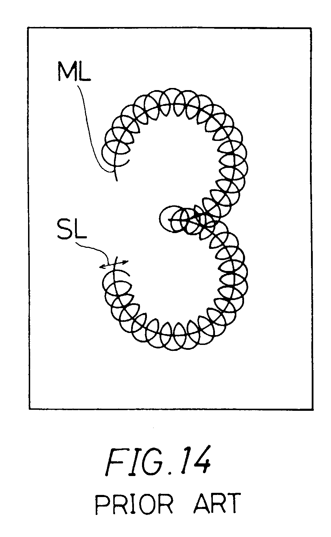

In the latter prior art (Japanese Publication No. 61-193119), a laser beam of a short wavelength emitted by an excimer laser or the like is converged into a minute spot as compared with the mark size. In this art, as shown in FIG. 14, the minute spot is moved generally along the mark pattern ML and, at the same time, is vibrated at a minute breadth SL centered at the pattern ML. With this technique, minute irregularities are formed on the lens where the laser beam impinged, and thus, the obtained mark has optically uneven surface irregularities.

Either of these techniques uses a laser beam having a wavelength in the ultraviolet region, which has a great chemical effect but a quite small thermal energy (thermal effect). Consequently, radiation of the laser beam causes no dissolution of the lens material, resulting in formation of a mark having a quite small depth.

In the former prior art disclosed in Japanese Publication No. 64-13520, however, as the bottom of the recess becomes very smooth or flat, it will be difficult to identify the mark if it is small. Especially, when the lens is immersed in liquid, the mark will be hardly distinguishable.

In the latter prior art disclosed in Japanese Publication No 61-193119, it is necessary not only to move the minute spot along the mark pattern ML but also to vibrate it at a minute breadth SL centred at the pattern ML. This results in complication of the apparatus due to a vibrating mechanism therefore as well as much time required for the marking process.

It is, accordingly, an object of the present invention to provide a method of marking an ophthalmic lens in which a very distinguishable and clear mark having a minimum depth as required can be positively and easily inscribed on the ophthalmic lens.

According to the present invention, there is provided a method of marking a surface of an ophthalmic lens by radiation of a laser beam emitted from an excimer laser source having KrF as a laser medium, through a mark pattern forming mask, characterised in that the laser beam is passed through a mesh-like mask whereby optically minute irregularities are formed on the surface illuminated by the laser beam to form an optically opaque visually distinguishable mark comprising an assembly of patterns.

The mark pattern forming mask has a perforated portion provided in the form of the mark, and the mesh-like mask has a number of minute holes formed over the whole surface thereof.

Radiation of a KrF excimer laser beam causes optically minute irregularities to be formed on the surface of the ophthalmic lens. Consequently, the marked portion becomes optically opaque like ground glass, so that even a small mark can be quite readily distinguished from the other transparent portion of the lens. The KrF excimer laser beam, which has a wavelength in the ultraviolet region, has a great chemical effect but a quite small thermal energy (thermal effect). Consequently, radiation of the laser beam causes no dissolution of the lens material, resulting in formation of a mark having a quite small depth.

Thus, the method of marking an ophthalmic lens according to the invention is effective to positively and readily inscribe a very distinguishable and clear mark having a minimum depth as required.

The mark thus obtained is an assembly of a number of minute cavities arranged in the form of the mark pattern. Consequently, the physically pitted mark is inscribed on the lens surface, the mark being composed of optically minute irregularities. As the laser beam having a wavelength in the ultraviolet region is used,the mark thus formed has a quite small depth.

Thus, a very distinguishable and clear mark having a minimum depth as required can be positively and readily obtained.

The invention will be further described by way of example, with reference to the accompanying drawings, in which:-
Figure 1 is a perspective view of the arrangement of main parts of a marking apparatus;
Figures 2(A) and 2(B) schematically illustrate a microphotograph of a mark inscribed by a conventional marking method using a CO₂ laser;
Figures 3(A) and 3(B) schematically illustrate a microphotograph of the mark inscribed by the apparatus of Figure 1;
Figures 4(A) and 4(B) schematically illustrate a microphotograph of a further mark inscribed by the apparatus of Figure 1;
Figures 5(A) and 5(B) schematically illustrate a microphotograph of the mark inscribed by a conventional method;
Figure 6 is a plan view of a mask pattern used in the apparatus of Figure 1;
Figure 7 is a plan view of a mesh-like mask used in the method of the present invention;
Figure 8 is a perspective view illustrating how to use the masks in Figure 7;
Figures 9(A) and 9(B) schematically illustrate a microphotograph of a mark inscribed on the contact lens produced by the method of the invention;
Figure 10 is a plan view illustrating the pattern of another mesh-like mask used in the present method;
Figure 11 schematically illustrates a microphotograph of a mark inscribed on the contact lens using the mask shown in Figure 10;
Figures 12(A), 12(B) and 12(C) schematically illustrate various mark patterns;
Figures 13(A), 13(B) and 13(C) schematically illustrate microphotographs of various marks inscribed on the contact lens using the masks of Figure 12; and
Figure 14 schematically illustrates a mark inscribed by a conventional marking method using a laser beam of a short wavelength emitted by an excimer laser.

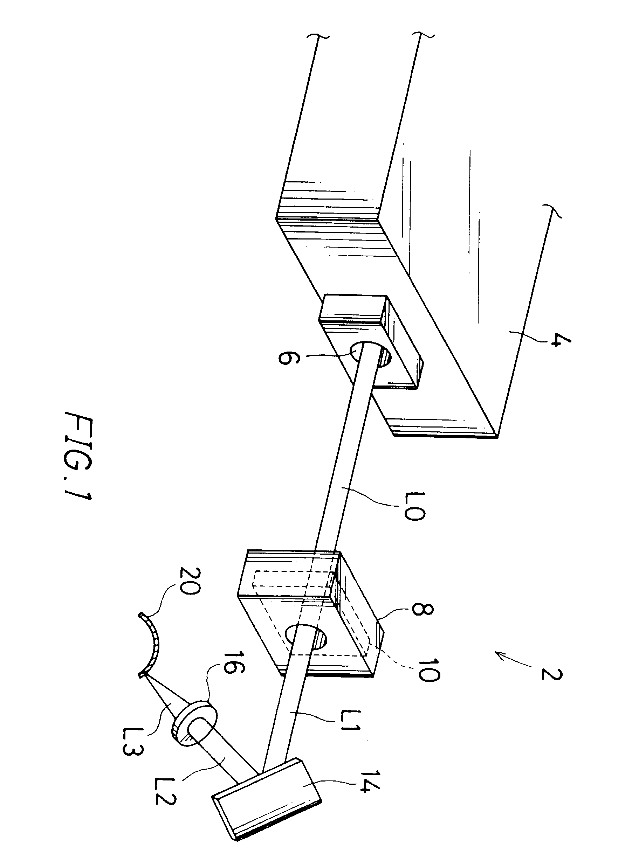

Figure 1 is a perspective view showing the arrangement of main parts of a marking apparatus which will be used to perform the invention to be described later.

As shown in Figure 1, a marking apparatus 2 for an ophthalmic lens is mainly composed of an excimer laser source 4 which emits an ultraviolet laser beam LO, a mask 10 for forming a mark pattern, a mask holder 8, a reflector 14 and a converging lens 16.

The ultraviolet laser beam LO emitted from a laser outlet 6 of the excimer laser source 4 impinges on the mask 10 held in the mask holder 8 to form a laser beam L1 having a mark pattern. The reflector 14 is used to change the direction of the laser beam L1, which is then converted by the converging lens 16 into a minute spot to be radiated on a contact lens 20.

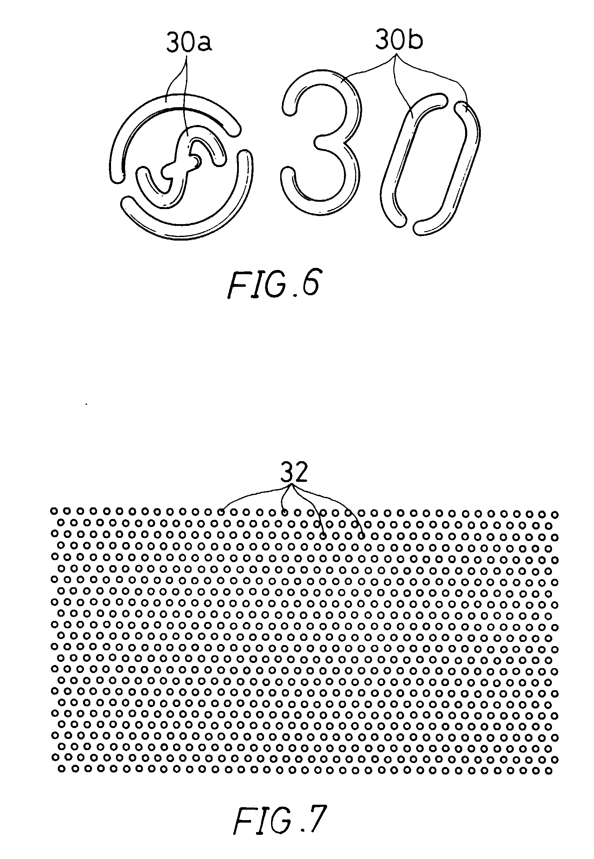

The mark pattern to be used will be described with reference to Figure 6 which is a plan view.
A mark to be inscribed on the ophthalmic lens may have symbol, number or letter patterns including a logotype of the manufacturer, a lens parameter, a lot number, an identification symbol indicating the front or back side of a soft contact lens, a symbol indicating the right or left eye use.

Figure 6 illustrates a mask 10 having a symbol pattern 30a and a letter pattern 30b. These patterns 30a and 30b are composed of perforations formed through the mask 10 shown in Figure 1. When the ultraviolet laser beam LO impinges on the mask 10, only the portions of the laser beam corresponding to the patterns 30a and 30b pass through the mask 10, forming the laser beam L1 having the mark pattern.

A marking process using the marking apparatus 2 thus constructed will be described with reference to Figure 1.

First, the mask 10 having the patterns 30a and 30b is set in the mask holder 8, and the contact lens 20 is placed on a support base, not shown. Then, the excimer laser source 4 is activated to emit an ultraviolet laser beam LO from the laser outlet 6. The ultraviolet laser beam LO impinges on the mask 10 to form the laser beam L1 having the mark pattern.

The laser beam L1 in turn impinges on the reflector 14 to produce a laser beam L2 directed vertically to the surface of the contact lens 20. The laser beam L2 is then converged by the converging lens 16 into a minute spot, constituting a laser beam L3 which is then radiated on the marking position of the contact lens 20.

Thus, a small mark having the patterns 30a and 30b is inscribed on the surface of the contact lens 20.

The result of marking according to the above process will be explained with reference to Table 1 and FIGS. 3(A) and 3(B).

The marking process was carried out under four conditions which were respectively defined in Table 1. Two types of lenses, a water-absorbable soft contact lens (hereinafter abbreviated to "SCL") and an oxygen-permeable hard contact lens (hereinafter abbreviated to "HCL") were used for marking.

The SCL contained N-vinylpyrolidone as a main component. The HCL contained tris (trimethylsiloxy) silyl propylmethacrylate and methylmetacrylate as main components. Marking of the SCL was carried out in a dry condition.

In all cases, KrF was used as a laser medium for the excimer laser source 4. The excimer laser using KrF as a laser medium emitted a laser beam having a wavelength of 248 nm. The pulse energy density of the excimer laser 4 was fixed between 700 and 900 mJ/cm². As a comparison, the result obtained by the prior art CO2 laser (emitting a laser beam having a wavelength of 10600 nm) is shown in the rightmost column in Table 1.

**Table 1**

| Conditions | 1 | 2 | 3 | 4 | Prior Art |
|---|---|---|---|---|---|
| Lens Type | SCL | SCL | SCL | HCL | HCL |
| Laser Medium | KrF | KrF | KrF | KrF | CO2 |
| Beam Wavelength | 248 | 248 | 248 | 248 | 10600 |
| Number of Shot | 1 | 5 | 2 | 2 | 1 |
| Mark Depth (µm) | 1.5 | 5 | 2.8 | 1.2 | 12 |
| | to | to | to | to | to |
| | 2.0 | 7 | 3.3 | 1.5 | 15 |

The depth of each of the marks inscribed under the above conditions 1 to 4 was measured by a surface roughness tester ("Form Talysurf" manufactured by Ralk Taylor Hobson Company). The result of the measurement was shown in the lowermost row of Table 1.

By comparing the result of the condition 4 in which the workpiece to be marked was the HCL with that of the prior art in which the same HCL was used, it will be noted that a single shot of beam radiation in the prior art marking resulted in a mark depth of 12 µm or more, while the mark depth obtained by two shots of the beam radiation under the condition 4 was one-tenth of that of the prior art marking.

In the marking process under each of the conditions 1 to 3 in which the workpiece was the SCL, improved results was also obtained in comparison with the prior art marking.

Thus, the depth of the mark obtained by this marking method is much smaller than that by the prior art CO₂ laser. This can eliminate deposits such as lipid and protein on the mark and the problem of increased possibility of breakage of the contact lens due to reduction of the mechanical strength.

Referring to FIGS. 3(A) and 3(B), the mark thus obtained will be carefully examined in comparison with the mark in FIGS. 2(A) and 2(B) obtained by the prior art method. FIGS. 3(A) and 3(B) schematically illustrate a microphotograph of a symbol portion of the mark inscribed on the contact lens by this marking method. FIG. 3 (A) schematically shows the microphotograph of a low magnification, while FIG. 3(B) schematically shows the microphotograph of a high magnification. The pattern of the mask used is the same as that used in the prior art masking in FIGS. 2(A) and 2(B) and slightly different from the symbol pattern 30a in FIG. 6.

As shown in FIGS. 3(A) and 3(B), the mark 22 inscribed on the surface of the contact lens (SCL) 20 is not accompanied with such peripheral ridges 124 surrounding the mark 122 as shown in FIGS. 2(A) and 2(B). This is because the ultraviolet laser beam emitted by the excimer laser 4 imparts little thermal effect to the contact lens 20.

Further, as shown in FIGS. 3(A) and 3(B), the mark 22 is opaque like ground glass, which is distinguishable from the surrounding portion thereof. This is caused by the chemical effect given by the ultraviolet laser beam emitted by the excimer laser 4 using KrF as a laser medium. Thus, a quite clear and distinguishable mark is obtainable, in spite of the small depth of the mark 22 ranging from 1.5 to 2.0 µm as shown in Table 1. When a laser using ArF gas as a laser medium is used under the same conditions, the bottom of the mark becomes flat, and thus, the mark becomes very indistinguishable.

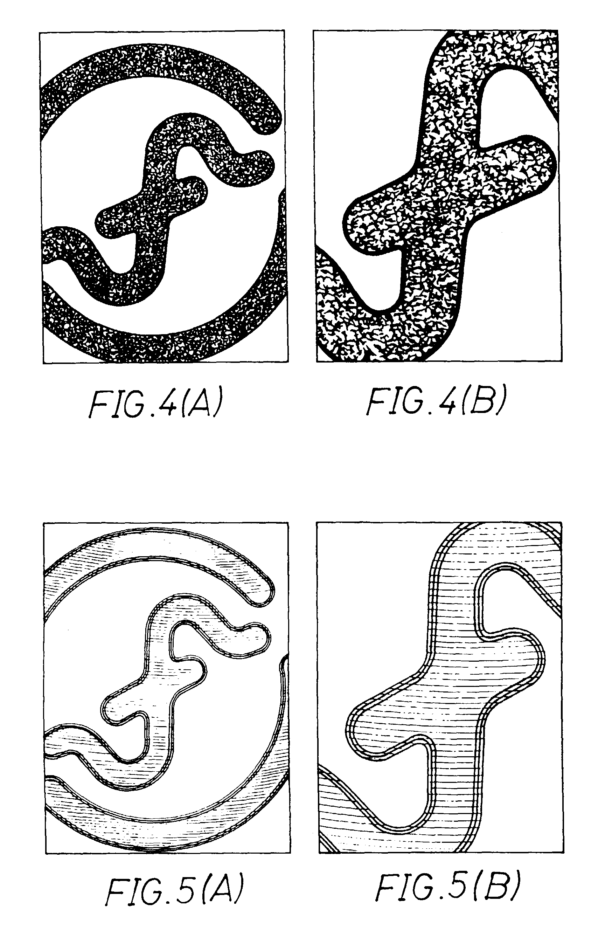

The effect of the KrF laser can be seen by referring to Figures 4(A) and 4(B) which schematically illustrate a microphotograph of a mark inscribed on an ophthalmic lens

Using an excimer laser in which
KrF is used as a laser medium to mark a contact lens (SCL) but under the condition a little different from that above.

As shown in FIGS. 4(A) and 4(B), the mark has a surface of a minute embossed pattern which is a little different from that shown in FIGS. 3(A) and 3(B). Thus, the mark becomes optically opaque like ground glass, forming a readily distinguishable mark having a minimum depth as required.

In order to clearly show the advantage of the laser marking method using the excimer laser in which KrF is used as a medium, marking was carried out for comparison using an excimer laser source in which ArF is used as a medium. The mark thus obtained is schematically shown in the microphotograph of FIGS. 5(A) and 5(B).

As shown in FIGS. 5(A) and 5(B), with the ArF excimer laser, the mark has a smooth surface with little irregularities, showing a remarkable difference from those in FIGS. 3(A), 3(B), 4(A) and 4(B). Thus, the mark in FIGS. 5(A) and 5(B) looks rather transparent and is difficult to be distinguished.

By comparison of the mark in FIGS. 4(A) and 4(B) with that in FIGS. 5(A) and 5(B), it is apparent that the marking method using KrF excimer laser is quite effective to form an opaque and distinguishable mark.

An embodiment of the present invention will now be described with reference to FIGS. 1, 6, 7, 8, 9(A) and 9(B). FIGS. 6 and 7 are respective plan views of two masks used in the method of the embodiment. In this embodiment, a mask including symbol and letter patterns 30a and 30b as shown in FIG. 6 and another mask having a plurality of circular holes 32 regularly arranged in vertical and transverse lines as shown in FIG. 7 are used.

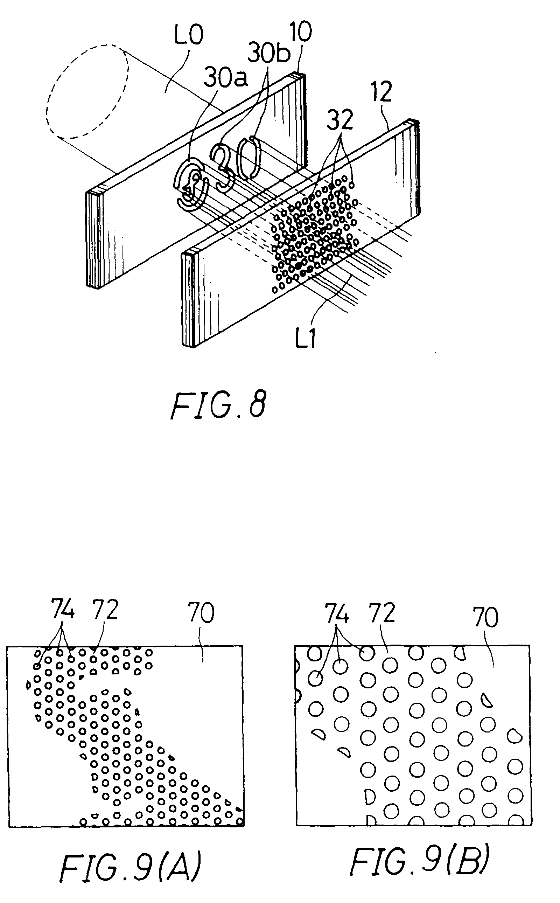

In this embodiment, these two masks are used as shown in FIG. 8 which is a perspective view of the masks used in the method of the embodiment.

As shown in FIG. 8, a first mask 10 including the symbol and letter patterns 30a and 30b shown in FIG. 6 and a second mask 12 having the plurality of regularly arranged circular holes 32 shown in FIG. 7 are placed one after the other. These two masks 10 and 12 are set one after the other in the mask holder 8. Any number of masks may be used as required, or a single mask including the symbol and letter patterns 30a and 30b as well as the plurality of circular holes 32 may be used.

The mesh size of the mesh-like mask 12, i.e. outer diameter of the circular hole 32 is set so that the mesh size of the mark inscribed on the contact lens may range from 1 µm to 0.5 mm, preferably from 5 µm to 0.1 mm. Specifically, various mesh-like masks of respective mesh sizes which are easy to be prepared may be used, and reduced or enlarged through a laser optical system so as to obtain a mesh pattern having a mesh size within a desired range.

The ultraviolet laser beam L0 emitted from the excimer laser source 4 in FIG. 1 sequentially passes through the first mask 10 and the second mask 12 to form a patterned ultraviolet laser beam L11, which is then converged and radiated on a contact lens as described above with reference to Figure 1.

The condition of the marking process of this embodiment is similar to condition 3 shown in Table 1 except the masks described above. The depth of the mark obtained in this embodiment was measured similarly and found to be very small, ranging from 1.0 to 1.5 µm, in spite of two shots of beam radiation.

A portion of the mark thus obtained is shown in detail in FIGS. 9(A) and 9(B).

FIGS. 9(A) and 9(B) schematically illustrate a microphotograph of a portion of the symbol pattern 30a of the mark inscribed on the contact lens by the marking method of this embodiment, in which FIG. 9(A) shows the microphotograph of a low magnification, while FIG. 9(B) shows the microphotograph of a high magnification.

As shown in FIGS. 9(A) and 9(B), the mark 72 inscribed on the surface of a contact lens (SCL) 70 is composed of an assembly of small circular patterns 74. This is because the laser beam passes through the symbol and letter mask patterns 30a and 30b and then through the pattern composed of the plurality of circular holes 32 to form the patterned laser beam L11 which is radiated on the contact lens. The mark 72 is free from formation of such peripheral ridges 124 as shown in FIGS. 2(A) and 2(B).

As the mark 72 is formed of the assembly of small circular patterns 74, light is irregularly reflected in the mark 72, causing the mark to be very clear and distinguishable, in spite of the rather small mark depth ranging from 1.0 to 1.5 µm. Furthermore, the mark 72 composed of the assembly of small circular patterns 74 is advantageously clearly distinguishable, even when the surface of the ophthalmic lens is covered with liquid.

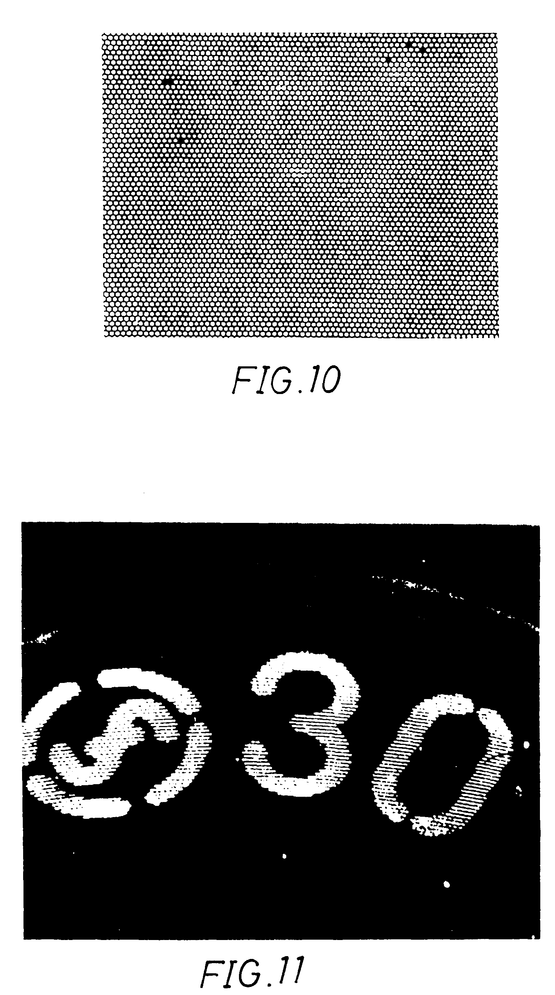

A second embodiment of the present invention will now be described with reference to FIGS. 10 and 11. FIG. 10 illustrates a pattern of a mesh-like mask used in this embodiment, and FIG. 11 schematically illustrates a microphotograph of a mark obtained by the marking method of this embodiment.

In this embodiment, the mesh-like mask 12 in FIG. 8 is replaced by a mesh-like mask more densely perforated as shown in FIG. 10, while a mark pattern forming mask similar to the mask 10 shown in FIG. 8 is used. The marking condition is the same as condition 3 shown in Table 1.

The mark thus obtained is composed of an assembly of minute concave and convex patterns in the form of the mark, which gives an opaque appearance like ground glass. The mark thus obtained is very distinguishable.

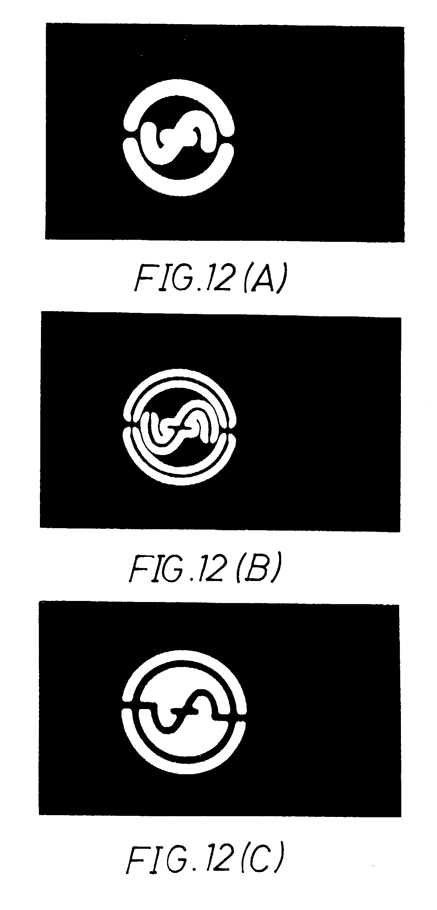

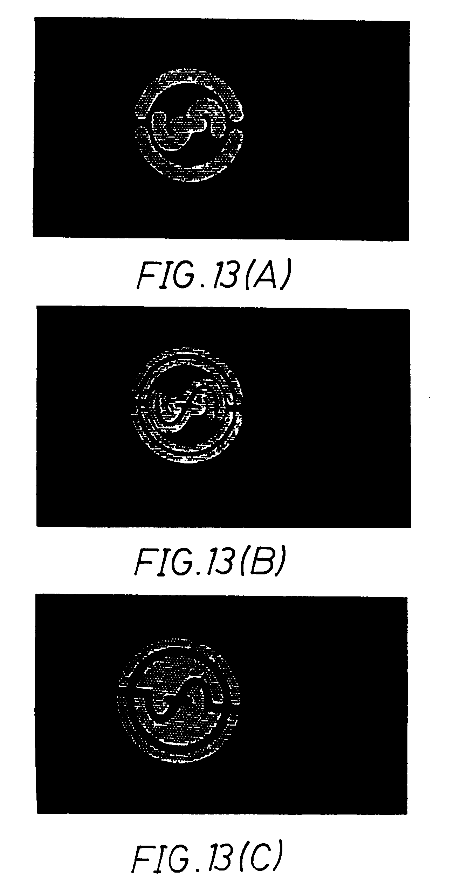

A third embodiment of the present invention will be described with reference to FIGS. 12(A), 12(B), 12(C), 13(A), 13(B) and 13(C). In this embodiment, three kinds of mark pattern forming masks as shown in FIGS. 12(A), 12(B) and 12(C) are used for laser marking. The mesh-like mask used in this embodiment is the one shown in FIG. 10, and the marking condition is similar to condition 3 shown in Table 1.

FIGS. 13(A), 13(B) and 13(C) schematically show microphotographs of the respective marks obtained. Thus, in the marking method of this embodiment, various masks having different mark patterns perforated can be used in combination with the mesh-like mask to obtain various marks which are physically pitted, providing opaque appearance corresponding to the respective mark patterns.

Though the mesh-like mask used in the above embodiments has circular holes, it will be understood that the shape of the hole may be other than circular. For example, a lattice mesh (square or rectangular holes) or oval or triangular holes may be used. In any case, the mesh size (the diameter of a hole and the space between holes) of the mark inscribed on the contact lens is set to range from 1 µm to 0.5 mm, preferably from 5 µm to 0.1 mm.

Though, in the above embodiments, the ophthalmic lenses to be marked include a water-absorbable soft contact lens (SCL) and an oxygen-permeable hard contact lens (HCL), other lenses such as oxygen-permeable hard contact lens formed from other materials and a moistureless soft contact lens can be marked. In addition to the contact lenses, intraocular lens or other ophthalmic lenses can be also marked.

The other parts of the apparatus for marking an ophthalmic lens are not limited to the above embodiments as to their construction, shape, size, material, number, arrangement or the like.

As described above, the method of marking an ophthalmic lens of the invention uses, as a marking laser beam, a laser beam emitted from an excimer laser source in which KrF is used as a laser medium, permitting positive and ready formation of a very clear and distinguishable mark having a minimum depth as required.

This assures provision of a method of inscribing an ophthalmic lens with a quite clear and distinguishable mark, without deposits such as lipid and protein on the mark and the problem of increased possibility of breakage of the ophthalmic lens due to reduction of the mechanical strength.

The present invention has an additional effect that, as the ultraviolet laser beam used in this invention is a laser beam having a wavelength of 290 nm or less, the number of shots required to inscribe a clear mark can be lowered to 1 to 10 in comparison with the marking process by a laser beam having a wavelength above 290 nm. This assures provision of a more effective method of marking an ophthalmic lens.

The method of marking an ophthalmic lens of the invention uses a laser beam having a wavelength in the ultraviolet region and a combination of a mark pattern forming mask and a mesh-like mask to inscribe a mark on the ophthalmic lens, permitting positive and ready formation of a very clear and distinguishable mark having a minimum depth as required.

## Claims

1. A method of marking a surface of an ophthalmic lens by radiation of a laser beam (L0,L1) emitted from an excimer laser source (4) having KrF as a laser medium, through a mark pattern forming mask (10), characterised in that the laser beam (L0) is passed through a mesh-like mask (12) whereby optically minute irregularities are formed on the surface illuminated by the laser beam (21) to form an optically opaque visually distinguishable mark comprising an assembly of patterns (74).

2. A method according to claim 1, wherein the laser beam (L0,L1) passed through said mark pattern forming mask (10) and said mesh-like mask (12) is converged into spot on the surface of the lens by a converging lens (16).

## Patentansprüche

1. Verfahren zum Markieren einer Oberfläche einer ophthalmischen Linse durch Bestrahlen mit einem Laser-Strahl (L0, L1), ausgesendet von einer Excimer-Laser Quelle (4) mit KrF als ein Laser-Medium, durch eine ein Zeichenmuster bildende Maske (10), dadurch gekennzeichnet, daß der Laserstrahl (L0) durch eine maschenartige Maske (12) hindurchgeht, wobei optisch winzige Unregelmäßigkeiten auf der beleuchteten Oberfläche durch den Laserstrahl (21) gebildet werden, um ein optisch undurchsichtiges, visuell unterscheidbares Zeichen, bestehend aus einer Ansammlung von Mustern (74), zu bilden.

2. Verfahren nach Anspruch 1, dadurch gekennzeichnet, daß der Laserstrahl (L0, L1), nachdem er durch die das Zeichenmuster bildende Maske (10) und die maschenartige Maske (12) hindurchgegangen ist, durch eine Sammellinse (16) auf einen Leuchtfleck auf der Oberfläche des Glases konvergiert wird.

## Revendications

1. Procédé de marquage d'une surface d'une lentille ophtalmique par rayonnement d'un faisceau laser (L0, L1) émis à partir d'une source de laser à excimer (4) ayant du KrF en tant que milieu de laser, à travers un masque (10) de formation de motif de marque caractérisé en que le faisceau laser (L0) passe à travers un masque analogue à un treillis (12) de sorte que des irrégularités minuscules sur le plan optique sont formées sur la surface illuminée par le faisceau laser (21) pour former une marque, pouvant être distinguée visuellement et optiquement opaque, comportant un ensemble de motifs (74).

2. Procédé selon la revendication 1, dans lequel le faisceau laser (L0, L1) passe à travers ledit masque (10) de formation de motif de marque et ledit masque analogue à un treillis (12) est mis à converger en un point situé sur la surface de la lentille par une lentille de convergence (16).
